# EUROPEAN PATENT APPLICATION

(11) **EP 1 439 549 A1**
(43) Date of publication of application: **21.07.2004**
(21) Application number: 02802007.1
(22) Date of filing: 10.10.2002
(51) Int. Cl.: H01F 1/113, C04B 35/26

(54) **METHOD FOR PRODUCING OXIDE MAGNETIC MATERIAL BASED PERMANENT MAGNET**

(30) Priority: 24.10.2001 JP 2001325836; 10.09.2002 JP 2002263575
(71) Applicant: TDK Corporation, Chuo-ku, Tokyo 103-8272 (JP)
(72) Inventor: TSUBOKURA, Taeko, c/o TDK Corporation, Tokyo 103-8272 (JP); SUZUKI, Tsuneo, c/o TDK Corporation, Tokyo 103-8272 (JP); MORI, Takahiro, c/o TDK Corporation, Tokyo 103-8272 (JP); MURASE, Taku, c/o TDK Corporation, Tokyo 103-8272 (JP)
(74) Representative: HOFFMANN - EITLE
(86) International application number: PCT/JP2002/010530
(87) International publication number: WO 2003/036662

(57) **Abstract**

The present invention provides a method for manufacturing a permanent magnet based on oxide magnetic material, comprising a binder addition step for adding a binder to raw material powder containing oxide magnetic materials for mixing; a water content adjustment step for adjusting the water content of a molding mixture containing the raw material powder and the binder; an in-magnetic-field dry molding step for loading the molding mixture with adjusted water content into a mold and pressing it in a magnetic field applied while aligning the directions of easy magnetization of oxide magnetic material powder particles; and a sintering step for sintering the molded body; wherein the binder in the binder addition step is a wax based on fatty acid ester, and wherein the molding mixture charged into the mold in the in-magnetic-field dry molding step contains aggregates, in which the percentage of existence of aggregates in size of 500µm or more is 0.01 to 0.80wt%, thus obtaining the permanent magnet based on oxide magnetic material with excellent magnetic properties while cutting down on costs.

## Description

### TECHNICAL FIELD

The present invention relates to a method for manufacturing a permanent magnet based on oxide magnetic material, and more particularly to the method for manufacturing a permanent magnet based on oxide magnetic material molded through so-called dry molding.

### BACKGROUND ART

Anisotropic oxide permanent magnets made of magneto-plumbites such as Sr ferrite and Ba ferrite are manufactured by sintering after molding in a magnetic field. Molding in the magnetic field is broadly divided into dry molding and wet molding in terms of the method being used. Wet molding provides excellent magnetic material orientation and therefore allows excellent magnetic properties to be obtained since permanent magnet material particles can readily rotate in a dispersion medium. However, it is necessary to discharge the dispersion medium out of the molding space (out of the mold's cavity) during pressure molding, thus resulting in reduced productivity. Further, molds large in structure must be used, thus leading to increased equipment cost.

On the other hand, dry molding is a molding method in which dry permanent magnet material powder is charged into the molding space (cavity) for molding in a magnetic field. Therefore, dry molding does not provide excellent magnetic material orientation as compared with wet molding; however, it has the prominent advantages of high productivity and low equipment cost.

Permanent magnet material charged into a mold in dry molding contains a binder. Among ideal characteristics required of binders are excellent material particle bonding action and property of not inhibiting material particles from becoming magnetically aligned in the direction of axis of easy magnetization. Some of the reasons for poor orientation are (1) magnetic inhibition of material particles, that is, inhibition of material particles from becoming magnetically aligned in the direction of axis of easy magnetization due to excessively strong bonding action between material particles and binder and (2) friction during molding, that is, friction caused by contact between particles and low moldability caused by insufficient pressure compaction as a result of friction produced between particles and the mold. To improve such an aggravation of orientation, attempts are being made in dry molding to select a low-friction binder which does not cause magnetic inhibition and add that binder to the permanent magnet material.

That is, paraffin wax, stearic acid, camphor and the like are used to be contained in magnet material as binder for molding by dry molding.

Although paraffin wax and stearic acid offer excellent bonding action, their extremely strong bonding action tends to inhibit material particles from becoming magnetically aligned in the direction of axis of easy magnetization. On the other hand, although camphor is effective as adhesive for use during molding when a magnetic field is applied, it sublimes, thus changing the camphor-ferrite-powder mixture ratio over time. For this reason, it has the disadvantage of interfering with molding process or reducing the molded body strength.

To solve these problems, binders using metallic salt of stearic acid (M = Ca, Ba, Sr, Pb when M is metal) (Japanese Patent Application *Kokoku* Publication No. Sho47-21197), binders using magnesium stearate (Japanese Patent Application *Kokoku* Publication No. 62-176102) and others have been suggested for use with ferrite magnet powder for dry magnetic field molding. However, since it is difficult to coat the surfaces of individual particles uniformly with such a binder using metallic salt of stearic acid, there is no alternative but to increase the amount of binder added. This leads to increased amount of carbon contained in magnet after sintering, resulting in deterioration of magnetic properties and crushing of the sintered body after sintering.

Note that coating of particle surfaces with a binder in gaseous state through heating or depressurization is one way for mixing a binder. However, this method not only entails large-scale equipment and large number of man-hours but also makes it impossible to reduce costs.

The present invention was conceived under such circumstances with a view toward improving orientation and sintered body's density to provide permanent magnets based on oxide magnetic material with excellent magnetic properties while cutting down on costs during the manufacture of permanent magnets based on oxide magnetic material using dry molding.

### DISCLOSURE OF THE INVENTION

In order to solve the above problems, the present invention provides a method for manufacturing a permanent magnet based on oxide magnetic material, comprising a binder addition step for adding a binder to raw material powder containing oxide magnetic materials for mixing; a water content adjustment step for adjusting the water content of a molding mixture containing the raw material powder and the binder; an in-magnetic-field dry molding step for charging the molding mixture with adjusted water content into a mold and pressing it in a magnetic field applied while aligning the directions of easy magnetization of oxide magnetic material powder particles; and a sintering step for sintering the molded body; wherein the binder in the binder addition step is a wax based on fatty acid ester, and wherein the molding mixture charged into the mold in the in-magnetic-field dry molding step contains aggregates, in which the percentage of existence of aggregates in size of 500µm or more is 0.01 to 0.80wt%.

In a preferred mode of the present invention, the water content of the mixture in the water content adjustment step is 0.20 to 0.80wt%.

In a preferred mode of the present invention, the wax based on fatty acid ester is a vegetable wax.

In a preferred mode of the present invention, the raw material powder of the oxide magnetic materials is prepared by compounding and mixing raw oxide materials, and then calcining the raw oxide materials and thereafter crushing them.

In a preferred mode of the present invention, the water content adjustment step includes adjusting the water content of the mixture while controlling the humidity.

In a preferred mode of the present invention, the binder content of the molding mixture is 0.2 to 1.5wt%.

In a preferred mode of the present invention, a crushing step is further provided which follows the water content adjustment step, for crushing aggregates in the molding mixture.

In a preferred mode of the present invention, the water content of the mixture is 0.20 to 0.80wt% at the completion of the crushing step.

### BEST MODE FOR CARRYING OUT THE INVENTION

A method for manufacturing a permanent magnet based on oxide magnetic material according to the present invention will now be described in detail.

The method for manufacturing the permanent magnet based on oxide magnetic material according to the present invention is comprised of a binder addition process, in which a binder is added to raw material powder containing oxide magnetic materials for mixing, a water content adjustment process in which water is added to the molding mixture containing the raw material powder and the binder for adjustment of water content of the mixture, an in-magnetic-field dry molding process in which the molding mixture with adjusted water content is introduced into a mold and pressed in a magnetic field applied while aligning the directions of easy magnetization of oxide magnetic material powder particles and a sintering process in which the molded body is sintered, as main processes.

Powder of raw material or oxide magnetic material made available prior to the binder addition process is normally prepared by the following procedure.

### [Preparation of raw material powder]

In the case of barium ferrite, for example, iron oxide (Fe₂O₃,) powder and barium carbonate (BaCO₃) powder are generally used as main raw materials while main raw materials of strontium ferrite are commonly iron oxide (Fe₂O₃) powder and strontium carbonate (SrCO₃) powder, in which these materials are weighed such that the prescribed composition is obtained, then they are further compounded after addition of prescribed additives and finally mixed using a ball mill and the like. Oxides and chlorides of Bi, As, B, Si, Ge, Na, Al, Cr, Ti, W and Mo are among those used as additives. These additives are used to promote sintering or prevent excessive growth of crystal grains. These mixtures are calcined at around 1000°C. This calcination allows decomposition and divergence of carbon dioxide content, thereby causing the combination between barium oxide and iron oxide or between strontium oxide and iron oxide to proceed.

The sintered materials are sufficiently crushed by a ball mill and the like. After crushing, additives may be further added as necessary.

### [Binder addition process]

A binder is added to the raw material powder containing oxide magnetic materials and prepared by the procedure described above for mixing. It is preferable that wax based on fatty acid ester, and particularly wax based on fatty acid ester whose molecular weight is 300 to 800 be emulsified and added as a binder. With the present invention, controlling the percentage of existence of aggregates 500µm or more in size within the prescribed range in particular along with use of wax based on fatty acid ester provides an exceptionally outstanding effect heretofore unavailable with conventional technologies, that is, a significantly excellent effect of not inhibiting material particles from becoming magnetically aligned in the direction of axis of easy magnetization appears.

In particular, vegetable or plant wax (e.g., Carnauba wax, Candelilla wax, Japan wax, Ouricury wax) are preferable even among wax based on fatty acid ester.

It is preferable that the amount of binder added be 0.2 to 1.5wt%, particularly 0.25 to 1.2wt% and further 0.3 to 0.9wt%. If only an excessively small amount of binder is added, no effects as binder appear, resulting in poor moldability. On the other hand, if an excessively large amount of binder is added, the sintered body declines in density as a result of carbonization of organic substances, thus deteriorating the Br and other magnetic properties.

In this binder addition process, a molding assistant agent may be further added.

Stearic acid and stearates (calcium stearate, zinc stearate, magnesium stearate, aluminum stearate and the like) are among suitable examples of the molding assistant agent for molding. Addition of molding assistant agent provides effects such as improved moldability, improved molding flow property and reduced molding friction, as a result of which magnetic properties can be further improved. It is preferable that the amount of addition be 0.04 to 0.4wt%. No effects as molding assistant agent appear if only an excessively small amount of additive agent for pressing is added while addition of an excessively large amount causes the sintered body to decline in density as a result of carbonization of organic substances, thus deteriorating the magnetic property of Br.

When the raw material powder containing magnetic powder is mixed with a binder, mixing is conducted in liquid or solid form. When a liquid binder is used, coagulation readily occurs, as a result of which magnetic powder's orientation tends to decrease. On the other hand, when a solid binder is used, the difficulty of achieving uniform mixing is observed. Henschel mixer, blender and the like are used to sufficiently agitate the binder during mixing. When the binder is mixed, it is preferable that mixing be conducted in a temperature range at or below the melting point of the binder. If mixing is conducted at a temperature range at or beyond the melting point of the binder, the binder melts, thus making it difficult for the binder to uniformly coat magnetic powder particles.

### [Water content adjustment process]

In this water content adjustment process, the water content of the molding mixture containing the raw material powder and the binder is adjusted by adding water to the mixture or reducing water.

The post-mixing amount of water in the molding mixture can substantially affect moldability and magnetic properties. It is preferable that the water content be 0.20 to 0.80wt% and particularly 0.25 to 0.35wt%. If the water content is less than 0.20wt%, it is difficult to maintain the desired form in the next process or molding process. If the water content is more than 0.80wt%, aggregation of magnetic powder occurs, thus inhibiting material particles from becoming magnetically aligned in the direction of axis of easy magnetization and decreasing the magnetic property of Br. Note also that reduction in sintering density, crushing and pinholes tend to occur.

As for water content adjustment prcess, it is possible to achieve a desired amount of water by controlling the temperature and the humidity. It is desirable that water content be adjusted by leaving the mixture standing at room temperature or that water be added by fine steam (on the order of several to several tens of microns) from a thermo-hygrostat, nebulizer and the like. For example, use of an atomizer and the like which produces larger water particles leads to the aggregation of the magnetic particles, thus resulting in a tendency to disturb the orientation during molding.

It is preferable that a crushing process, in which aggregates in the molding mixture are crushed, be provided after this water content adjustment process. Provision of a crushing process, for example, allows aggregates produced by drying to be removed (crushed into fine particles). In the presence of aggregates, it is difficult to achieve orientation when a magnetic field is applied during in-magnetic-field dry molding process which is described later, thus causing deterioration of magnetic properties. If this crushing process is operated after the water content adjustment process, it is preferable that the water content of the mixture at the completion of the crushing process be 0.20 to 0.80wt%. The reason for this is the same as that described in the water content adjustment process.

### [In-magnetic-field dry molding process]

The molding mixture whose water content has been adjusted is introduced into a mold and pressed in a magnetic field. This makes it possible to align the directions of easy magnetization of the raw material powder (magnetic powder particles) and improve the magnetic properties.

In the present invention, the percentage of existence of aggregates in size of 500µm or more, in the molding mixture charged into a mold during the in-magnetic-field dry molding process (charged raw material) is commonly 0.01 to 0.80wt% and preferably 0.01 to 0.78wt%. If this value exceeds 0.80wt%, it becomes difficult to achieve orientation when a magnetic field is applied during in-magnetic-field dry molding process, thus causing deterioration of the magnetic properties. The lower limit may be zero; however, 0.01wt% is conceivably appropriate with the current technical level.

The percentage of existence of aggregates in size of 500µm or more, was determined by the procedure described below. That is, the molding mixture was sifted through an automatic sieving machine for three minutes of vibration first, then the percentage of aggregates in size of 500µm or more was measured, and the percentage of existence of aggregates in size of 500µm or more was calculated based on the measurement.

The orientation magnetic field and the molding pressure used during the in-magnetic-field dry molding process are commonly on the order of 3 to 12 kOe (239 to 955 kA/m) and 0.1 to 5 tons/cm², respectively.

The molded body thus formed is sintered in the next process or sintering process.

### [Sintering process]

The molded body formed in the in-magnetic-field dry molding process is sintered in this process. The sintering temperature is preferably in the range of 1200-1260°C. If the sintering temperature is set to be below 1200°C, it is difficult to obtain sufficient sintering density. On the other hand, if the sintering temperature exceeds 1260°C, abnormal particle growth readily occurs, thus resulting in a tendency to reduce the iHc value. The stabilization time for sintering is commonly around 0.5 to 4.0 hours. The sintering atmosphere may be in air, however, sintering by controlling a partial pressure of oxygen, provides magnets with even higher density and high magnetic properties.

The present invention is described below in detail by referring to specific examples.

100 parts by weight of calcined Sr ferrite powder, 0.5 part by weight of SiO₂ and 1 part by weight of CaCO₃ were dry crushed into fine powder using water such that the specific surface of calcined powder is 7.0 m²/g. Then, the slurry was dried for use as the experimental raw material powder.

After the binders shown in Table 1 were added to the raw material powder thus obtained, mixing was conducted using a blender for ten minutes at 75°C. After mixing, the molding assistant agent(calcium stearate) shown in Table 1 was added in prescribed amounts.

Next, the water content in this mixture powder was adjusted using a thermo-hydrostat as shown in Table 1.

Later, this mixture powder was crushed as necessary using an atomizer as shown in Table 1 for use as permanent magnet material.

Next, this permanent magnet material was dry molded in a magnetic field of approximately 7.5 kOe. A molding pressure of 1 ton/cm² was used. The molded body thus obtained was sintered at 1240°C for one hour in atmosphere, as a result of which a magnet sample about 26 mm in diameter and 10 mm in height was obtained.

The magnet sample thus obtained was subjected to evaluate the magnetic properties of Br and iHc by using the B-H Tracer (Toei Kogyo Kabushiki Kaisha: DC magnetization characteristic measuring device TRF-5BH).

Moreover, a density of the molded body (dp) and a density of the sintered body (df) were measured by the following procedure:

### Density of the molded body (dp)

The density of the molded body was determined by dividing the weight W by the volume V after determining the volume V from its actual dimensions and measuring the weight W. dp = W/V

### Density of the sintered body (df)

The density of the sintered body (df) was calculated based on the values obtained using the Archimedes process.

Further, moldability and pinholes were evaluated based on the criteria given below.

### Moldabillly

The molded body was visually checked to make judgments.

### (Judgment criteria)

○: Provides a perfect molded product.
Δ: Partially cracked.
×: Cannot be treated as a molded product.

### Pinholes

The cross section of sintered samples was polished to a mirror-smooth state and the composition observed after magnification by 50 times by an optical microscope. As a result, those samples with obvious pinholes which were not of practical use were marked "x" in Table 1. Samples with no pinholes found were marked "○" in Table 1. Those marked "-" were the samples which could not be molded.

Note that the percentage of existence of aggregates in size of 500µm or more in the molding mixture in Table 1 was measured as described above.

The results are shown below in Table 1.

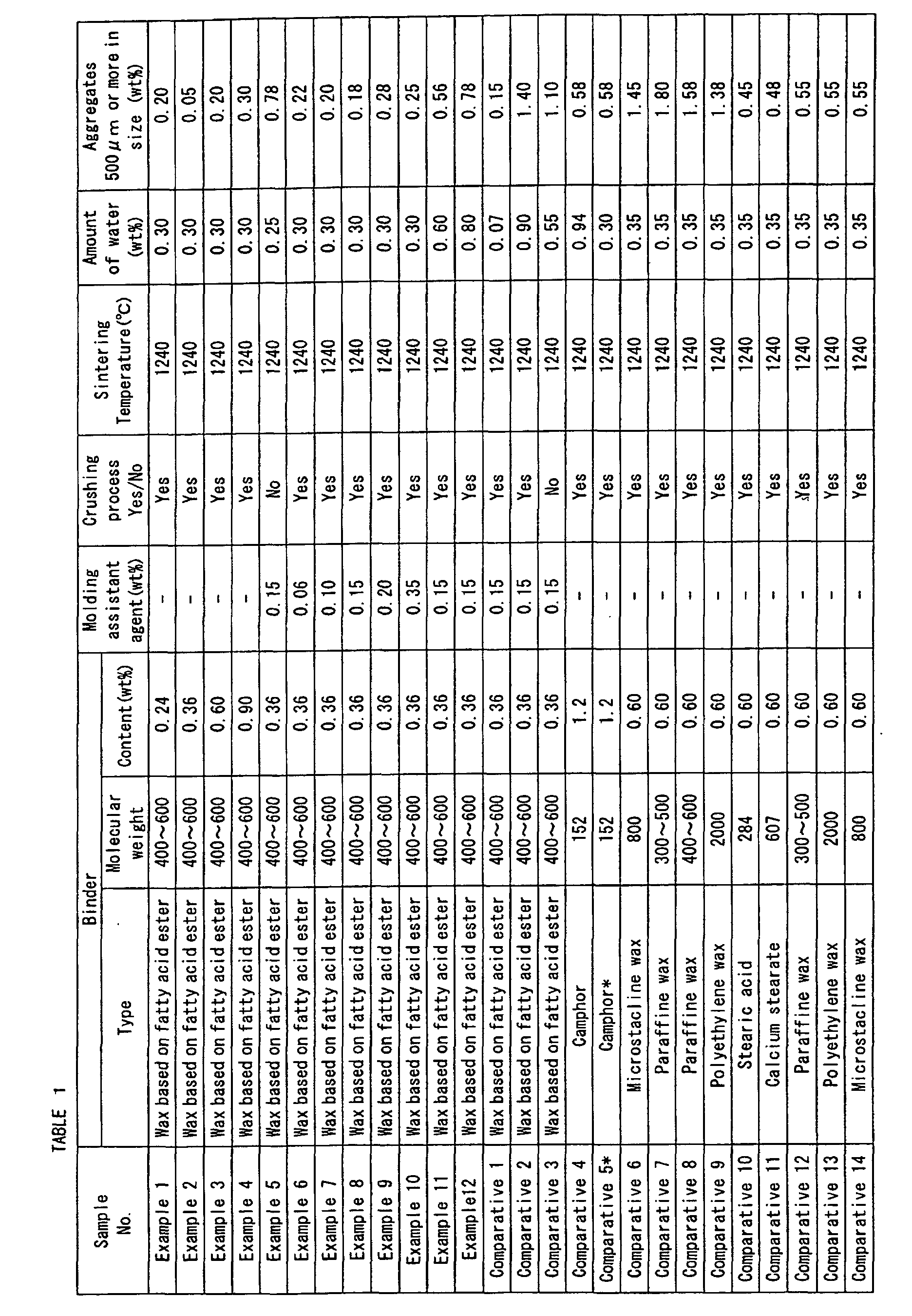

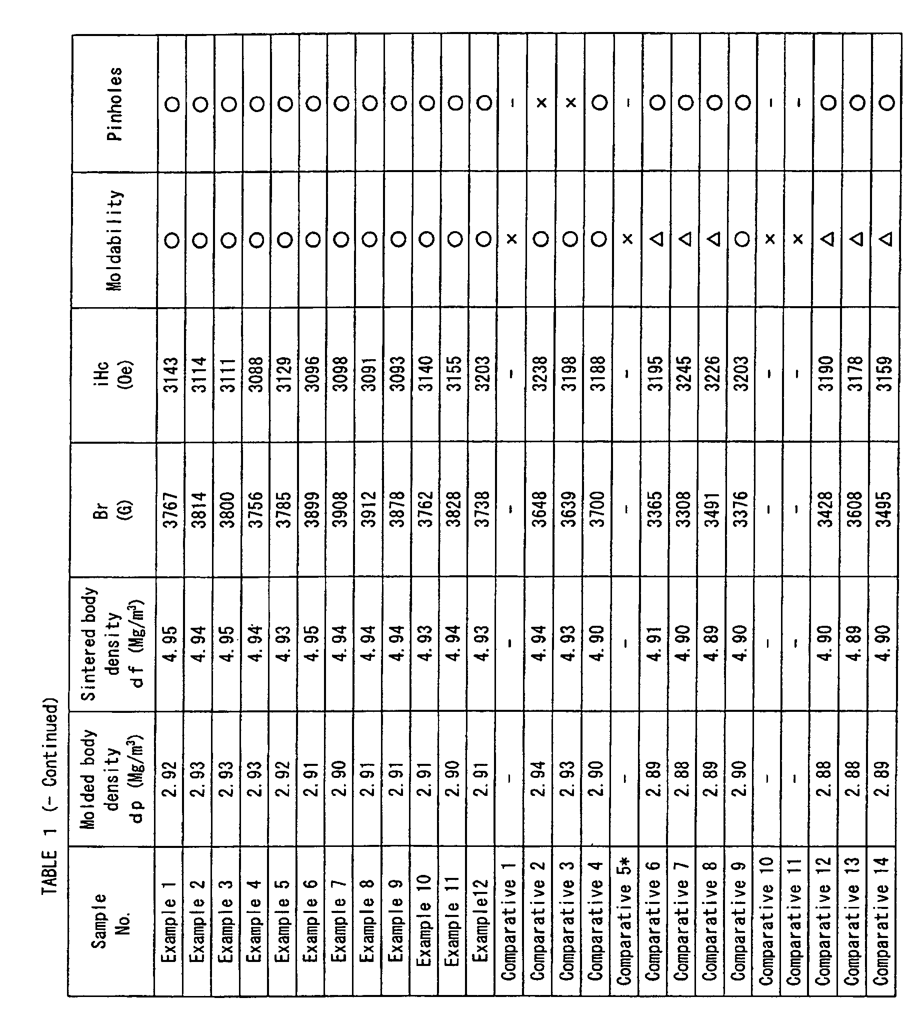

The sample for comparative example 5 is a sample which an attempt was made to mold after the binder had been added and the raw material left standing for one week.

The results of comparative example 4 are favorable, however, they turn to the unfavorable results as shown in comparative example 5* unless molding is conducted immediately after mixing of a binder. Therefore, the sample for comparative example 4 offers poor secular stability after mixing of a binder and is extremely inconvenient to handle.

The effect of the present invention is obvious from the above results. That is, the present invention is a method for manufacturing a permanent magnet based on oxide magnetic material comprising a binder addition process, in which a binder is added to raw material powder containing oxide magnetic materials for mixing, a water content adjustment process in which the water content of the molding mixture containing the raw material powder and the binder is adjusted, an in-magnetic-field dry molding process in which the molding mixture with adjusted water content is introduced into a mold and pressed in a magnetic field applied while aligning the directions of easy magnetization of oxide magnetic material powder particles and a sintering process in which the molded body is sintered, in which fatty acid ester based wax is used as binder in the binder addition process and in which molding mixture loaded into a mold in the in-magnetic-field dry molding process is prepared such that a percentage of existence of aggregates in size of 500µm or more in the molding mixture is 0.01 to 0.80wt%, thus providing oxide magnetic material based permanent magnets with excellent magnetic properties while cutting down on costs.

### INDUSTRIAL APPLICABILITY

The present invention can be used to manufacture a permanent magnet based on oxide magnetic material.

## Claims

1. A method for manufacturing a permanent magnet based on oxide magnetic material, comprising:
a binder addition step for adding a binder to raw material powder containing oxide magnetic materials for mixing;
a water content adjustment step for adjusting a water content of a molding mixture containing the raw material powder and the binder;
an in-magnetic-field dry molding step for loading the molding mixture with adjusted water content into a mold and pressing it in a magnetic field applied while aligning the directions of easy magnetization of oxide magnetic material powder particles: and
a sintering step for sintering the molded body; wherein the binder in the binder addition step is a wax based on fatty acid ester, and
wherein the molding mixture charged into the mold in the in-magnetic-field dry molding step contains aggregates, in which the percentage of existence of aggregates in size of 500µm or more is 0.01 to 0.80wt%.

2. The method for manufacturing a permanent magnet based on oxide magnetic material as defined in claim 1, wherein the water content of the mixture in the water content adjustment step is 0.20 to 0.80wt%.

3. The method for manufacturing a permanent magnet based on oxide magnetic material as defined in claim 1, wherein the wax based on the fatty acid ester is a vegetable wax.

4. The method for manufacturing a permanent magnet based on oxide magnetic material as defined in claim 1, wherein the raw material powder of the oxide magnetic materials is prepared by compounding and mixing raw oxide materials, and then calcining the raw oxide materials and thereafter crushing them.

5. The method for manufacturing a permanent magnet based on oxide magnetic material as defined in claim 1, wherein the water content adjustment step includes adjusting the water content of the mixture while controlling the humidity.

6. The method for manufacturing a permanent magnet based on oxide magnetic material as defined in claim 1, wherein the binder content of the molding mixture is 0.2 to 1.5wt%.

7. The method for manufacturing a permanent magnet based on oxide magnetic material defined in claim 1, further comprising a crushing step which follows the water content adjustment step, for crushing aggregates in the molding mixture.

8. The method for manufacturing a permanent magnet based on oxide magnetic material as defined in claim 7, wherein the water content of the mixture is 0.20 to 0.80wt% at the completion of the crushing step.
